# EUROPEAN PATENT SPECIFICATION

(11) **EP 2 718 827 B1**
(45) Date of publication and mention of the grant of the patent: **10.08.2016**
(21) Application number: 11867381.3
(22) Date of filing: 07.06.2011
(51) Int. Cl.: G06F 13/00

(54) **AN INNOVATIVE STRUCTURE FOR THE REGISTER GROUP**
INNOVATIVE STRUKTUR FÜR EINE REGISTERGRUPPE
STRUCTURE INNOVATRICE POUR LE GROUPE DE REGISTRES

(43) Date of publication of application: 16.04.2014
(73) Proprietor: Telefonaktiebolaget LM Ericsson (publ), 164 83 Stockholm (SE)
(72) Inventor: LI, Wenjia, Beijing 100000 (CN); WEN, Gan, Beijing 100085 (CN); GAO, Tonghai, Beijing 102208 (CN); WANG, Qiang, Beijing 100050 (CN)
(74) Representative: Röthinger, Rainer
(86) International application number: PCT/CN2011/000948
(87) International publication number: WO 2012/167396

(56) References cited:
- EP-A1- 1 369 793
- CN-A- 101 809 537
- US-A- 6 073 233
- US-A1- 2007 115 292
- US-B1- 7 737 725
- "Device Control Register Bus 3.5 Architecture Specifications", , 27 January 2006 (2006-01-27), XP055132600, Retrieved from the Internet: URL:https://www-01.ibm.com/chips/techlib/t echlib.nsf/techdocs/2F9323ECBC8CFEE0872570 F4005C5739/$file/DcrBus.pdf [retrieved on 2014-07-31]

## Description

### TECHNICAL FIELD

The present invention relates generally to processing circuit architecture and, more particularly, to a pipeline architecture for a processing circuit having multiple modules connected in series to form a module pipeline.

### BACKGROUND

A processing circuit for a mobile terminal or other device may be implemented as an Application Specific Integrated Circuit (ASIC), or Field Programmable Gate Array (FPGA) where different functions are implemented by different modules. Implementation of different functions in different modules enables one module to be updated or replaced without affecting the function of the other modules. Configuration data, status information, and other data used by a module to implement its assigned functions are stored in registers. The use of registers for storing configuration data enables the modules to operate in multiple modes and to perform multiple functions.

The organization of the registers in the processing circuit is one design consideration. One conventional approach to organizing the registers is to centralize all registers in a register unit. Each module interfaces directly to the matched registers. The register unit is responsible for decoding registers addresses and outputting stored values to corresponding modules.

This centralized approach has several disadvantages. For example, the centralized solution requires the register unit to decode all register addresses, which generally requires complex logic, and thus, leads to timing problems. Further, because the register unit is responsible for distributing all registers to the modules, it needs to interface with all of the modules. This one-to-many interface may lead to a routing jam at the register module group. In addition, this solution is hard to update. For example, if a new module is added or removed, the register unit and the corresponding logic have to be revised.

Another conventional approach to organizing the registers is to distribute the registers among modules connected to an internal register bus. In this approach, each module includes its own register group and decoder and is connected to an internal register bus. A bus converter provides an external interface to the register bus and converts the external interface protocol into the internal register bus protocol. All of the modules monitor the internal register bus simultaneously. When a register request is asserted, all of the modules decode a target register address associated with the register request. If the target register address specifies a register that belongs to the module, the module latches the register data into or reads register data from the specified register. All other modules do nothing.

While the internal bus structure eliminates the one-to-many interface and the update problems associated with the centralized register solution, the bus structure solution still encounters timing problems. In particular, as the number of modules interfacing with the internal register bus increases, the fan-out of the register bus is very high, which results in a large timing delay.

Thus, there remains a need for an improved processing circuit architecture that eliminates or reduces timing problems associated with the conventional approaches.

Document US 6,073,233 A may be construed to disclose a Local Register Network (LRN) including multiple nodes connected together by a local register bus. The nodes each include logic circuitry, one or more configuration registers, a data path and a decoder. The local register bus is unidirectional and transfers data and addresses to each one of the nodes. The decoder in each node contains local memory maps for the node configuration registers. Each decoder determines whether an address on the local register bus maps to the associated configuration registers and whether the accessed configuration registers read data onto the local register bus or write data from the local register bus. If the address does not map to the node, the data path passes the data to the next node in the LRN network.

### SUMMARY

According to the invention, there are provided methods and apparatuses according to the independent claims. Developments are set forth in the dependent claims.

A processing circuit may comprise a plurality of modules serially connected by a plurality of register bus segments to create a module pipeline. Each module may comprise one or more registers and is assigned a corresponding address range. A register request, including a target register address, may be passed from one module to the succeeding module down the module pipeline until the register request is received at the module containing the targeted register.

Exemplary embodiments of the invention comprise methods implemented by a processing module connected with a plurality of like modules in a module pipeline. In one exemplary method, a register request including a target register address may be received over a first interface connected to a preceding module by a first segment of an internal register bus. The target register address may be compared to an address range of the processing module. If the target register address falls within the address range of the processing module, a matching register in the processing module may be accessed to write data to or read data

from the matching register. If the target register address falls outside the processing module's register address range, the register request may be output over a second interface to a succeeding module connected to the processing module by a second segment of the internal register bus.

Other embodiments of the invention comprise a processing module in a processing circuit connected to a plurality of like modules forming a module pipeline. One exemplary processing module may comprise a first interface, a second interface, one or more registers for storing data, and a decoder. The first interface may connect to a preceding module via a first segment of an internal register bus. The second interface may connect to a succeeding module via a second segment of the internal register bus. The decoder may be configured to receive a register request over the first interface and to compare a target register address associated with the register request to an address range for the processing module. If the target register address falls within the register address range, the decoder may access a matching register in the processing module to write data into or read data from the matching register. If the target register address falls outside the address range of the processing module, the decoder may output the register request to the succeeding module over the second interface.

Other embodiments of the invention comprise a method implemented by a processing circuit having a plurality of modules connected to form a module pipeline. In one exemplary method, a register request including a target register address may be sequentially passed through the plurality of modules serially connected by an internal register bus. The internal register bus may comprise a plurality of segments connecting adjacent modules. At each module receiving the register request, the target register address may be compared to an address range of the receiving module. If the target register address falls within the address range of the receiving module, a matching register within the receiving module may be accessed to write data into or read data from the matching register. If the target register address falls outside the address range of the receiving module and if there is a succeeding module, the register request may be passed to the succeeding module over the internal register bus.

Other embodiments of the invention comprise a processing circuit with a pipeline architecture. In one embodiment, the processing circuit may comprise a plurality of modules, an internal register bus having two or more segments connecting the plurality of modules in series to form a module pipeline, and a decoder for each module. Each module may include one or more registers. The internal register bus may be configured to pass a register request including a target register address through the serially connected modules. The decoder for a receiving module may be configured to compare the target register address to a register address range for the receiving module. If the target register address falls within the register address range of the receiving module, a matching register within the receiving module may write data into or read data from the matching register. If the target register address falls outside the register address range of the receiving module and if there is a succeeding module, the decoder may pass the register request to the succeeding module.

The pipeline architecture and techniques herein described provide improved timing performance as compared to the conventional solutions. Further, the processing circuit is more easily extended by modifying existing modules or adding new modules to the pipeline. Because the registers are implemented inside respective modules, modifications to one module will not affect other modules.

### BRIEF DESCRIPTION OF THE DRAWINGS

Figure 1 shows a block diagram of a processing circuit having serially connected modules according to one exemplary embodiment.
Figure 2 shows a block diagram of an exemplary module for the configurable circuit of Figure 1.
Figure 3 shows an exemplary method performed by a module.
Figure 4 shows an exemplary interface diagram between three modules.
Figure 5 shows another exemplary method performed by a module.

### DETAILED DESCRIPTION

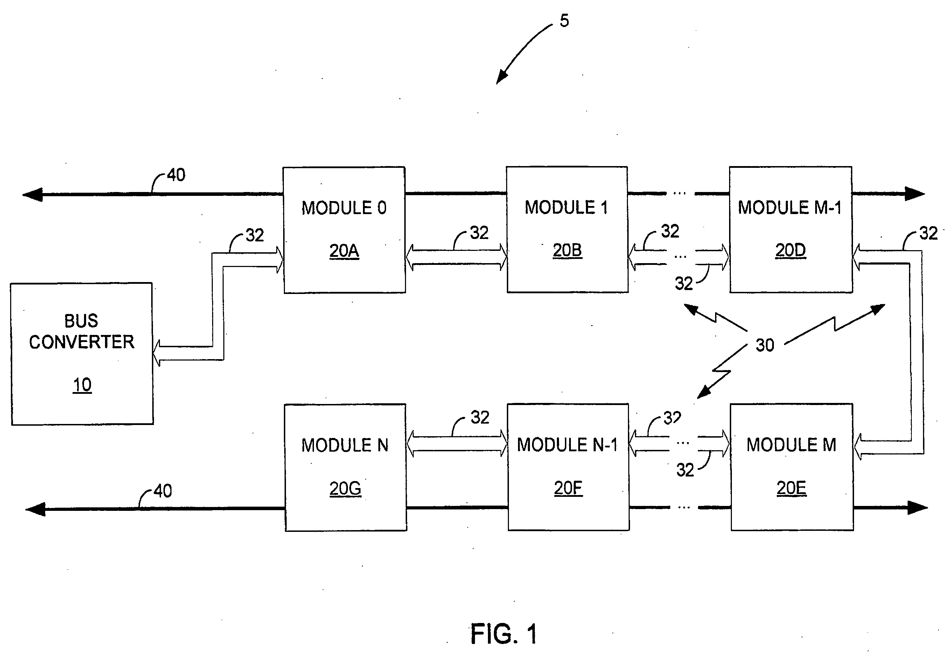

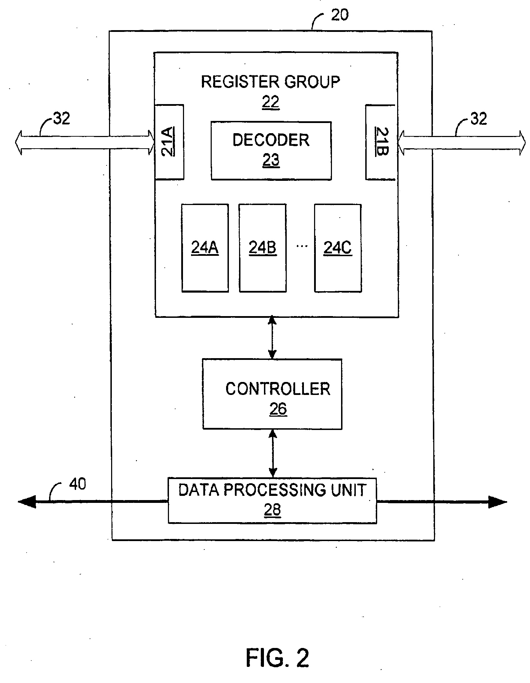

Figure 1 shows a processing circuit 5 according to one exemplary embodiment. The processing circuit 5 may comprise, for example, an Application Specific Integrated Circuit (ASIC) or Field Programmable Gate Array (FPGA). Processing circuit 5 includes a bus converter 10 and a plurality of modules 20A-G. As will be described in more detail below, each module 20 includes one or more registers 24 (Figure 2) for storing configuration data, status information, or other data used by the module 20. The bus converter 10 and modules 20 are connected in series by segments 32 of an internal register bus 30. Each segment of the internal register bus 30 connects one module 20 to a preceding module 20, a succeeding module 20, and/or the bus converter 10 to form a module pipeline. Each module 20 also connects to a data bus 40 to receive data to be processed and to output processed data. Two data buses 40 are shown in the exemplary embodiment. Those skilled in the art will appreciate, however, that the number of data buses is not material to the invention.

Bus converter 10 provides an external interface to the internal register bus 30 to enable external applications to access the registers within the modules 20. The bus converter 10 receives register requests from external applications over an interface bus (not shown) and converts register requests from an external interface protocol used on the interface bus to an internal register bus protocol used on the internal register bus 30. The bus converter 10 forwards the converted register request to the first module 20A in the module pipeline. As will be described in greater detail below, the register request is sequentially passed from one module 20 to the succeeding module 20 until it arrives at the module 20 containing the targeted register. Upon receiving the register request, the receiving module 20 decodes the target register address and compares the decoded address to its assigned register address range to determine whether the target register belongs to the receiving module 20. If the target register address falls within the register address range of the receiving module 20, the module 20 latches the register data into or reads the register data from the matching register, i.e., the register having a register address matching the target register address. If the target register address falls outside the register address range of the receiving module 20, the receiving module 20 passes the register request to the succeeding module 20.

Figure 2 illustrates the main functional components of an exemplary module 20. Module 20 comprises a register group 22, a controller 26, and a data processing unit 28. Register group 22 comprises a decoder 23 and one or more registers 24. Registers 24 store configuration information, status information, or other information used by the module 20. The decoder 23 decodes the target register addresses associated with register requests received by the module 20 as hereinafter described. The controller 26 controls the operation of the module 20 and provides the data processing unit 28 access to the registers 24 in the register group 22. The data processing unit 28 performs the processing functions assigned to the module 20. Data processing unit 28 may perform different functions or operate in different modes depending on the configuration data stored in the registers 24. That is, by writing configuration data into the registers 24, the function or mode of the data processing unit 28 can be controlled.

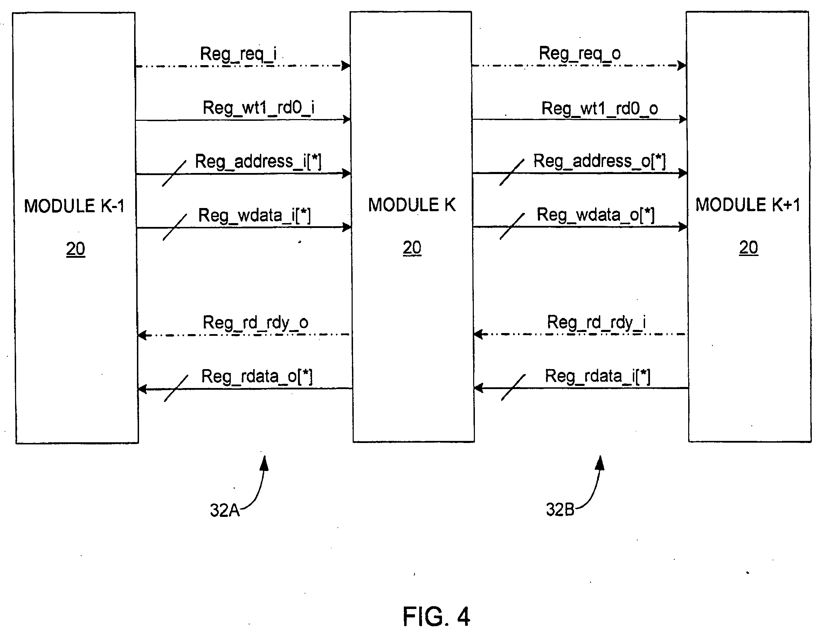

Each register 24 within the register group 22 has a corresponding register address within a predetermined register address range for the host module 20. It will be appreciated that the register address range of a module 20 comprises one or more addresses assigned to the registers 24 within the module 20, and that the register address range may be contiguous or discontiguous. The register group 22 has a first interface 21A connected by one internal bus segment 32 to a preceding module 20 or bus converter 10, and second interface 21 B connected by another internal bus segment 32 to a succeeding module 20. The second interface 21 B is not used by the last module 20 in the module pipeline, e.g., module 20G. The first and second interfaces are shown in Figure 4 and described in more detail below.

To access a register 24, an external application sends a register request to the bus converter 10. The bus converter 10 converts the register request into the internal register bus protocol and forwards the converted register request to the first module 20A. The register request includes a target register address that specifies a targeted register. The register request may comprise a write request or a read request. When a register request is received by a module 20 over the first interface 21A, the decoder 23 decodes the target register address associated with the register request and compares the target register address with the address range and/or the individual addresses of its registers 24 to determine whether the targeted register belongs to the module 20. If the targeted register does not belong to the module 20, decoder 23 outputs the register request over the second interface to the succeeding module 20 in the pipeline. If the targeted register belongs to the module 20, decoder 23 either latches the write data into the targeted register (write request), or reads the register data from the targeted register (read request).

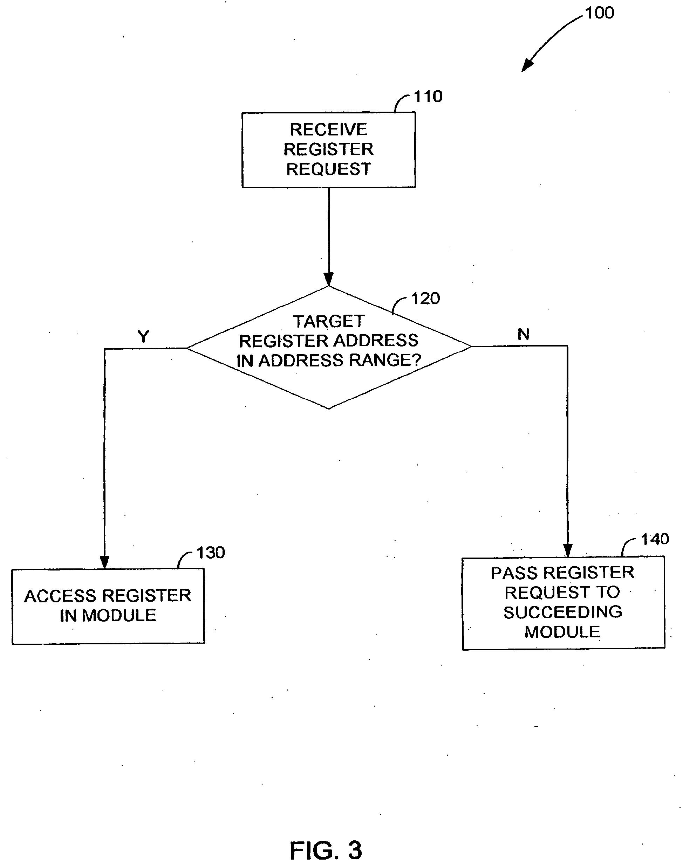

Figure 3 shows an exemplary process 100 implemented by a processing module 20. Processing module 20 receives a register request including a target register address on a first interface (block 110) connected to a preceding module 20 or the bus converter 10 by a first segment of an internal register bus, and compares the target register address to a register address range for the receiving module 20 (block 120). If the target register address falls within the register address range of the processing module 20, the decoder 23 accesses the matching register 24 to write data into or read data from the matching register (block 130). If the target register address falls outside the register address range, the decoder 23 outputs the register request to the succeeding module 20 connected to the processing module 20 over the second interface (block 140).

Figure 4 illustrates exemplary interfaces contained in the internal bus segments connecting Module K to a preceding module, Module K-1, and a succeeding module, Module K+1. Table 1 identifies the various lines of the internal register bus segments 32, where the symbol "?" represents either "i" or "o", and where "i" indicates an input signal for module K and "o" indicates an output signal for module K.

**Table 1: Internal Register Bus Interface**

| **Label** | **Definition** |
|---|---|
| Reg_req_? | Register request |
| Reg_wt1_rd0_? | Write or read flag |
| Reg_address_?[*] | Request address bus indicating the target register address |
| Reg_wdata_?[*] | Write data line carrying write data when the Reg_wt1_rd0_? indicates a write flag |
| Reg_rd_rdy_? | Read out data from the target register when Reg_wt1_rd0_? indicates a read flag |
| Reg_rdata_?[*} | Valid flag of read-out data from the target register when Reg_wt1_rd0_? indicates a read flag |

The internal register bus interface comprises six interfaces. The first four interfaces listed in Table 1 provide the register request described herein to the receiving module 20, e.g., the write/read interface identifies whether the register request is a read request or a write request and the Reg_address interface carries the target register address. The remaining interfaces facilitate the read data passed up the pipeline as disclosed herein.

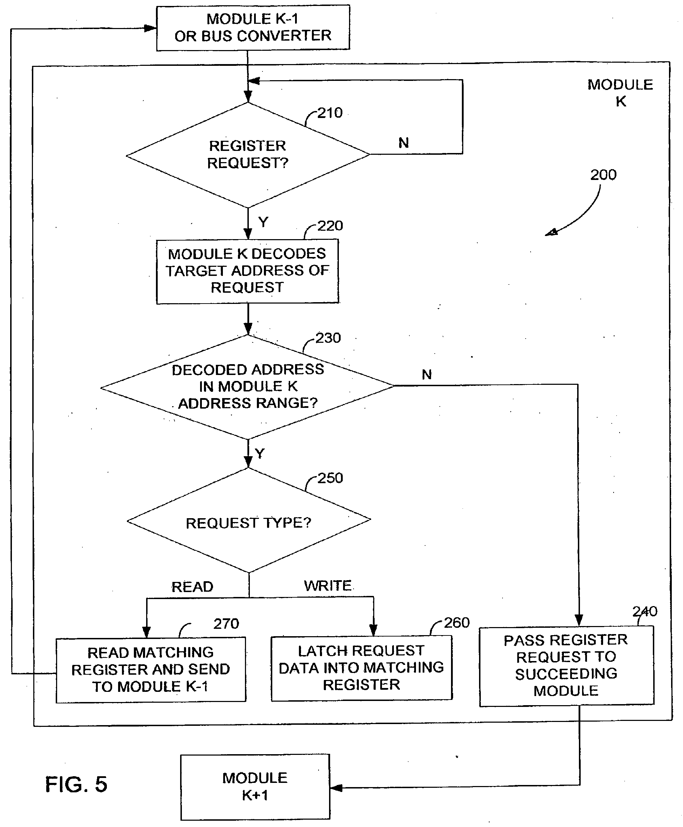

Figure 5 discloses another exemplary method 200 executed by a module 20, Module K. Module K monitors an interface with a preceding module 20, Module K-1, or the bus converter 10 to determine when a register request is received (block 210), where the register request is sequentially passed through the modules 20. When Module K receives a register request, a decoder 23 in Module K decodes the target address of the request (block 220). If the decoded address is not in the address range of Module K (block 230), Module K passes the register request along with any associated data to the succeeding module 20, Module K+1 to pass the register request and the associated data down the module pipeline (block 240). If, however, the decoded address is in the address range of Module K (block 230), decoder 23 determines the request type (block 250). If the register request is a write request, decoder 23 latches data associated with the register request into the matching register, i.e., the register in Module K having a register address matching the target register address (block 260). If the register request is a read request, decoder 23 reads data from the matching register and sends the read data to the preceding module 20, Module K-1 to pass the read data up the module pipeline (block 270). In this case, each module 20 receives the read data from a succeeding module 20 and outputs the received read data to a preceding module 20 to pass the read data up the module pipeline.

The processing circuit 5, module 20, and corresponding methods 100 and 200 disclosed herein have several benefits over conventional implementations, e.g., better timing performance, flexible update, and reduced power consumption. In particular, because each module 20 only decodes its own register address and the internal register bus is segmented, the timing issues of the conventional solutions are avoided. Further, a new module 20 may be added by connecting it into any stage of the register pipeline without requiring any modifications to the logic functions already implemented by the processing circuit. Similarly, an old module 20 may be removed from the processing circuit by disconnecting it from the register pipeline. Also, because most of the circuit power is consumed when the internal registers are toggled, and because using the pipeline structure disclosed herein reduces the register toggle rate because the pipeline structure terminates the register request when it arrives at the module 20 containing the target register, the pipeline structure disclosed herein reduces the circuit power consumption.

The present invention may, of course, be carried out in other ways than those specifically set forth herein without departing from essential characteristics of the invention. The present embodiments are to be considered in all respects as illustrative and not restrictive, and all changes coming within the scope of the appended claims are intended to be embraced therein.

## Claims

1. A method implemented by a processing module (20) connected with a plurality of like modules (20A to 20E) in a module pipeline, said method comprising:
receiving (100) a register request comprising a read request including a target register address over a first interface (21A) connected to a preceding module by a first segment (32) of an internal register bus (30);
comparing (120) the target register address to a register address range of the processing module;
if the target register address falls within the register address range of the processing module, accessing (130) a matching register in the processing module to read data from the matching register and outputting read data from the matching register to the preceding module over the first interface; and
if the target register address falls outside the register address range, outputting (140) the register request over a second interface (21B) to a succeeding module connected to the processing module by a second segment (32) of the internal register bus.

2. The method of claim 1 wherein the register request comprises a write request and includes write data, and wherein accessing the matching register comprises latching (260) the write data into the matching register.

3. The method of claim 2 further comprising outputting the write data to the succeeding module over the second interface to pass (240) the write data down the module pipeline when the target register address falls outside the register address range of the processing module.

4. The method of any of the preceding claims further comprising receiving read data from the succeeding module over the second interface, and outputting the read data to the preceding module over the first interface to pass the read data up the module pipeline.

5. A processing module (20) in processing circuit (5) connected to a plurality of like modules (20A to 20E) forming a module pipeline, said processing module comprising:
a first interface (21A) configured to connect to a preceding module by a first segment (32) of an internal register bus (30);
a second interface (21B) configured to connect to a succeeding module by a second segment (32) of the internal register bus;
one or more registers (24) configured to store data, each register having an associated register address within a corresponding register address range for the processing module; and
a decoder (23) configured to:
- receive a register request comprising a read request over the first interface, the register request including a target register address;
- compare the target register address to the register address range for the processing module;
- if the target register address falls within the register address range, access a matching register in the processing module to read data from the matching register and output read data from the matching register to the preceding module over the first interface; and
- if the target register address falls outside the register address range of the processing module, outputting the register request to the succeeding module over the second interface.

6. The processing module of claim 5 wherein the register request comprises a write request and includes write data, and wherein the decoder is configured to latch the write data into the matching register.

7. The processing module of claim 6 wherein the decoder is further configured to output the write data to the succeeding module over the second interface to pass the write data down the module pipeline when the target register address falls outside the register address range of the processing module.

8. The processing module of any of claims 5 to 7 wherein the decoder is further configured to receive read data from the succeeding module over the second interface and to output the read data to the preceding module over the first interface to pass the read data up the module pipeline.

9. A method implemented by a processing circuit (5) having a plurality of modules (20A to 20E) connected to form a module pipeline, said method comprising:
sequentially passing a register request comprising a read request including a target register address through the plurality of modules serially connected by an internal register bus (30), said internal register bus comprising a plurality of segments (32) connecting adjacent modules;
comparing (120), at each module receiving the register request, the target register address to a register address range of the receiving module;
if the target register address falls within the register address range of the receiving module, accessing (130) a matching register within the receiving module to read data from the matching register and outputting read data from the matching register to the preceding module over the first interface; and
if the target register address falls outside the register address range of the receiving module and if there is a succeeding module, passing (140) the register request to the succeeding module over the internal register bus.

10. The method of claim 9 wherein the register request comprises a write request and includes write data, the method further comprising passing (240) the write data from the receiving module down the module pipeline until the write data reaches the module containing the matching register.

11. The method of claim 10 wherein accessing the matching register comprises latching (260) the write data into the matching register.

12. The method of any of claims 9 to 11 further comprising passing the read data in the module pipeline from the succeeding module to a preceding module.

13. A processing circuit (5) comprising:
a plurality of modules (20A to 20E), each including one or more registers (24);
an internal register bus (30) having two or more segments (32) configured to connect the plurality of modules in series to form a module pipeline and configured to pass a register request comprising a read request including a target register address through the serially connected modules;
a decoder (23) for each module, said decoder configured to:
- compare the target register address to a register address range for the corresponding module;
- if the target register address falls within the register address range of the corresponding module, access a matching register within the module and read data from the matching register to output read data from the matching register to the preceding module over the first interface; and
- if the target register address falls outside the register address range of the corresponding module and if there is a succeeding module, pass the register request to the succeeding module.

14. The processing circuit of claim 13 wherein the register request comprises a write request and includes write data and wherein the decoders are configured to pass the write data from the corresponding module down the module pipeline until the write data reaches the module containing the matching register, and, optionally,
wherein the decoders are configured to latch the write data into the matching register.

15. The processing circuit of claim 13 wherein the decoder is further configured to pass read data up the module pipeline from the succeeding module to a preceding module.

## Patentansprüche

1. Verfahren, das durch ein Verarbeitungsmodul (20) implementiert wird, das mit einer Vielzahl gleicher Module (20A bis 20E) in einer Modul-Pipeline verbunden ist, wobei das Verfahren umfasst:
Empfangen (100) einer Registeranforderung, die eine Leseanforderung einschließlich einer Zielregisteradresse umfasst, über eine erste Schnittstelle (21A), die mit einem vorangegangenen Modul durch ein erstes Segment (32) eines internen Registerbusses (30) verbunden ist;
Vergleichen (120) der Zielregisteradresse mit einem Registeradressbereich des Verarbeitungsmoduls;
falls die Zielregisteradresse in den Registeradressbereich des Verarbeitungsmoduls fällt, Zugreifen (130) auf ein übereinstimmendes Register in dem Verarbeitungsmodul, um Daten aus dem übereinstimmenden Register zu lesen, und Ausgeben gelesener Daten aus dem übereinstimmenden Register zu einem vorangegangenen Modul über die erste Schnittstelle; und
falls die Zielregisteradresse aus dem Registeradressbereich herausfällt, Ausgeben (140) der Registeranforderung über eine zweite Schnittstelle (21B) zu einem nachfolgenden Modul, das mit dem Verarbeitungsmodul durch ein zweites Segment (32) des internen Registerbusses verbunden ist.

2. Verfahren gemäß Anspruch 1, wobei die Registeranforderung eine Schreibanforderung umfasst und Schreibdaten aufweist, und wobei das Zugreifen auf das übereinstimmende Register ein Verriegeln (260) der Schreibdaten in dem übereinstimmenden Register umfasst.

3. Verfahren gemäß Anspruch 2, weiterhin umfassend Ausgeben der Schreibdaten zu dem nachfolgenden Modul über die zweite Schnittstelle, um die Schreibdaten durch die Modulpipeline nach unten hin durchzureichen (240), wenn die Zielregisteradresse aus dem Registeradressbereich des Verarbeitungsmoduls herausfällt.

4. Verfahren gemäß einem der vorangegangenen Ansprüche, weiterhin umfassend Empfangen von Lesedaten von dem nachfolgenden Modul über die zweite Schnittstelle, und Ausgeben der gelesenen Daten zu dem vorangegangenen Modul über die erste Schnittstelle, um die gelesenen Daten in der Modulpipeline hochzureichen.

5. Verarbeitungsmodul (20) in einer Verarbeitungsschaltung (5), das mit einer Vielzahl gleicher Module (20a) bis (20e) verbunden ist, die eine Modulpipeline bilden, wobei das Verarbeitungsmodul umfasst:
eine erste Schnittstelle (21A), die konfiguriert ist, um sich mit einem vorangegangenen Modul durch ein erstes Segment (32) eines internen Busregisters zu verbinden;
eine zweite Schnittstelle (21B), die konfiguriert ist, um sich mit einem nachfolgenden Modul durch ein zweites Segment (32) des internen Registerbusses zu verbinden;
ein oder mehrere Register (24), das oder die konfiguriert ist oder sind, um Daten zu speichern, wobei jedes Register eine zugeordnete Registeradresse innerhalb eines entsprechenden Registeradressbereichs für das Verarbeitungsmodul aufweist; und
einen Dekodierer (23), der konfiguriert ist, um:
- eine Registeranforderung umfassend eine Leseanforderung über die erste Schnittstelle zu empfangen, wobei die Registeranforderung eine Zielregisteradresse enthält;
- die Zielregisteradresse mit dem Registeradressbereich für das Verarbeitungsmodul zu vergleichen;
- falls die Zielregisteradresse in den Registeradressbereich fällt, auf ein übereinstimmendes Register in dem Verarbeitungsmodul zuzugreifen, um Daten aus dem übereinstimmenden Register zu lesen, und um gelesene Daten aus dem übereinstimmenden Register zu dem vorangegangenen Modul über die erste Schnittstelle auszugeben; und
- falls die Zielregisteradresse aus dem Registeradressbereich des Verarbeitungsmoduls herausfällt, die Registeranforderung zu einem nachfolgenden Modul über die zweite Schnittstelle auszugeben.

6. Verarbeitungsmodul gemäß Anspruch 5, wobei die Registeranforderung eine Schreibanforderung umfasst und Schreibdaten aufweist, und wobei der Dekodierer konfiguriert ist, um die Schreibdaten in dem übereinstimmenden Register zu verriegeln.

7. Verarbeitungsmodul gemäß Anspruch 6, wobei der Dekodierer weiterhin konfiguriert ist, um die Schreibdaten zu dem nachfolgenden Modul über die zweite Schnittstelle auszugeben, um die Schreibdaten durch die Modulpipeline nach unten zu reichen, wenn die Zielregisteradresse aus dem Registeradressbereichs des Verarbeitungsmoduls herausfällt.

8. Verarbeitungsmodul gemäß einem der Ansprüche 5 bis 7, wobei der Dekodierer weiterhin konfiguriert ist, um gelesene Daten aus dem nachfolgenden Modul über die zweite Schnittstelle zu empfangen, und um die gelesenen Daten zu einem vorangegangenen Modul über die erste Schnittstelle auszugeben, um die gelesenen Daten durch die Modulpipeline hoch zu reichen.

9. Verfahren, das durch eine Verarbeitungsschaltung (5) mit einer Vielzahl von Modulen (20A bis 20E) implementiert ist, die verbunden sind, um eine Modulpipeline zu bilden, wobei das Verfahren umfasst:
sequenzielles Durchreichen einer Registeranforderung, die eine Leseanforderung umfasst, die wiederum eine Zielregisteradresse enthält, durch die Vielzahl von Modulen, die seriell durch einen internen Registerbus (30) verbunden sind, wobei der interne Registerbus eine Vielzahl von Segmenten (32) umfasst, die aneinander angrenzende Module verbinden;
Vergleichen (120), bei jedem Modul, das die Registeranforderung empfängt, der Zielregisteradresse mit einem Registeradressbereich des Empfangsmoduls;
falls die Zielregisteradresse in den Registeradressbereich des Empfangsmoduls fällt, Zugreifen (130) auf ein übereinstimmendes Register in dem empfangenden Modul, um Daten aus dem übereinstimmenden Register zu lesen, und Ausgeben gelesener Daten von dem übereinstimmenden Register zu dem vorangegangenen Modul über die erste Schnittstelle; und
falls die Sollregisteradresse aus dem Registeradressbereich des empfangenden Moduls herausfällt und falls ein nachfolgenden Modul vorliegt, Durchreichen (140) der Registeranforderung zu dem nachfolgenden Modul über den internen Registerbus.

10. Verfahren gemäß Anspruch 9, wobei die Registeranforderung eine Schreibanforderung umfasst und Schreibdaten aufweist, wobei das Verfahren weiterhin umfasst:
Durchreichen (240) der Schreibdaten von dem empfangenden Modul in der Modulpipeline nach unten, bis die Schreibdaten das Modul erreichen, das das übereinstimmende Register enthält.

11. Verfahren gemäß Anspruch 10, wobei das Zugreifen auf das übereinstimmende Register ein Verriegeln (260) der Schreibdaten in dem übereinstimmenden Register umfasst.

12. Verfahren gemäß einem der Ansprüche 9 bis 11, weiterhin umfassend Durchreichen der gelesenen Daten in der Modulpipeline von einem nachfolgenden Modul zu einem vorangegangenen Modul.

13. Verarbeitungsschaltung (5), umfassend:
eine Vielzahl von Modulen (20A bis 20E), von denen jedes ein oder mehrere Register (24) umfasst;
einen internen Registerbus (30), der zwei oder mehr Segmente (32) aufweist und konfiguriert ist, um
die Vielzahl von Modulen in Reihe zu schalten, um eine Modulpipeline zu bilden, und konfiguriert ist, um eine Registeranforderung umfassend eine Leseanforderung, die eine Zielregisteradresse enthält, durch die seriell verbundenen Module durchzureichen;
einen Dekodierer (23) für jedes Modul, wobei der Dekodierer konfiguriert ist, um:
- die Zielregisteradresse mit dem Registeradressbereich für das entsprechende Modul zu vergleichen;
- falls die Zielregisteradresse in den Registeradressbereich des entsprechenden Moduls fällt, auf ein übereinstimmendes Register innerhalb des Moduls zuzugreifen und Daten aus dem übereinstimmenden Register auszulesen, um Lesedaten aus dem übereinstimmenden Register zu dem vorangegangenen Modul über die erste Schnittstelle auszugeben; und
- falls die Zielregisteradresse aus dem Registeradressbereich des entsprechenden Moduls herausfällt und falls ein nachfolgendes Moduls vorliegt, die Registeranforderung zu dem nachfolgenden Modul durchzureichen.

14. Verarbeitungsschaltung gemäß Anspruch 13, wobei die Registeranforderung eine Schreibanforderung aufweist und Schreibdaten enthält, und wobei die Dekodierer konfiguriert sind, um die Schreibdaten aus dem entsprechenden Modul durch die Modulpipeline nach unten durchzureichen, bis die Schreibdaten das Modul erreichen, das das übereinstimmende Register umfasst, und optional,
wobei die Dekodierer konfiguriert sind, um die Schreibdaten in dem übereinstimmenden Register zu verriegeln.

15. Verarbeitungsschaltung gemäß Anspruch 13, wobei der Dekodierer weiterhin konfiguriert ist, um Lesedaten durch die Modulpipeline nach oben von dem nachfolgenden Modul zu einem vorangegangenen Modul durchzureichen.

## Revendications

1. Procédé mis en oeuvre par un module de traitement (20) relié à une pluralité de modules similaires (20A à 20E) dans un pipeline de modules, ledit procédé comprenant :
la réception (100) d'une demande de registre comprenant une demande de lecture comprenant une adresse de registre cible sur une première interface (21A) reliée à un module précédent par un premier segment (32) d'un bus de registre interne (30) ;
la comparaison (120) de l'adresse de registre cible à une plage d'adresses de registre du module de traitement ;
si l'adresse de registre cible se trouve dans la plage d'adresses de registre du module de traitement, l'accès (130) à un registre correspondant dans le module de traitement pour lire des données du registre correspondant et la livraison des données de lecture du registre correspondant au module précédent sur la première interface ; et
si l'adresse de registre cible est à l'extérieur de la plage d'adresses de registre, la livraison (140) de la demande de registre sur une deuxième interface (21B) à un module suivant relié au module de traitement par un deuxième segment (32) du bus de registre interne.

2. Procédé selon la revendication 1, dans lequel la demande de registre comprend une demande d'écriture et comprend des données d'écriture, et dans lequel l'accès au registre correspondant comprend le verrouillage (260) des données d'écriture dans le registre correspondant.

3. Procédé selon la revendication 2, comprenant en outre
la livraison des données d'écriture au module suivant sur la deuxième interface pour faire descendre (240)
les données d'écriture dans le pipeline de modules lorsque l'adresse de registre cible est à l'extérieur de la plage d'adresses de registre du module de traitement.

4. Procédé selon l'une quelconque des revendications précédentes, comprenant en outre la réception de données de lecture du module suivant sur la deuxième interface, et la livraison des données de lecture au module précédent sur la première interface pour faire remonter les données de lecture dans le pipeline de modules.

5. Module de traitement (20) dans un circuit de traitement (5) relié à une pluralité de modules similaires (20A à 20E) constituant un pipeline de modules, ledit module de traitement comprenant :
une première interface (21A) configurée pour se relier à un module précédent par un premier segment (32) d'un bus de registre interne (30) ;
une deuxième interface (21B) configurée pour se relier à un module suivant par un deuxième segment (32) du bus de registre interne ;
un ou plusieurs registres (24) configurés pour mémoriser des données, chaque registre ayant une adresse de registre associée, à l'intérieur d'une plage d'adresses de registre correspondante pour le module de traitement ; et
un décodeur (23) configuré pour effectuer :
- la réception d'une demande de registre comprenant une demande de lecture sur la première interface, la demande de registre comprenant une adresse de registre cible ;
- la comparaison de l'adresse de registre cible à la plage d'adresses de registre du module de traitement ;
- si l'adresse de registre cible se trouve dans la plage d'adresses de registre, l'accès à un registre correspondant dans le module de traitement pour lire des données du registre correspondant et la livraison des données de lecture du registre correspondant au module précédent sur la première interface ; et
- si l'adresse de registre cible est à l'extérieur de la plage d'adresses de registre du module de traitement, la livraison de la demande de registre au module suivant sur la deuxième interface.

6. Module de traitement selon la revendication 5, dans lequel la demande de registre comprend une demande d'écriture et comprend des données d'écriture, et dans lequel le décodeur est configuré pour verrouiller les données d'écriture dans le registre correspondant.

7. Module de traitement selon la revendication 6, dans lequel le décodeur est en outre configuré pour délivrer les données d'écriture au module suivant sur la deuxième interface pour faire descendre les données d'écriture dans le pipeline de modules lorsque l'adresse de registre cible est à l'extérieur de la plage d'adresses de registre du module de traitement.

8. Module de traitement selon l'une quelconque des revendications 5 à 7, dans lequel le décodeur est en outre configuré pour recevoir des données de lecture du module suivant sur la deuxième interface et pour délivrer les données de lecture au module précédent sur la première interface pour faire remonter les données de lecture dans le pipeline de modules.

9. Procédé mis en oeuvre par un circuit de traitement (5) ayant une pluralité de modules (20A à 20E) reliés entre eux pour constituer un pipeline de modules, ledit procédé comprenant :
le passage séquentiel d'une demande de registre comprenant une demande de lecture comprenant une adresse de registre cible à travers la pluralité de modules reliés en série par un bus de registre interne (30), ledit bus de registre interne comprenant une pluralité de segments (32) reliant des modules adjacents ;
la comparaison (120), à chaque module recevant la demande de registre, de l'adresse de registre cible à une plage d'adresses de registre du module de réception ;
si l'adresse de registre cible se trouve dans la plage d'adresses de registre du module de réception, l'accès (130) à un registre correspondant dans le module de réception pour lire des données du registre correspondant et la livraison des données de lecture du registre correspondant au module précédent sur la première interface ; et
si l'adresse de registre cible est à l'extérieur de la plage d'adresses de registre du module de réception et s'il y a un module suivant, le passage (140) de la demande de registre au module suivant sur le bus de registre interne.

10. Procédé selon la revendication 9, dans lequel la demande de registre comprend une demande d'écriture et comprend des données d'écriture, le procédé comprenant en outre la descente (240) des données d'écriture du module de réception dans le pipeline de modules jusqu'à ce que les données d'écriture atteignent le module contenant le registre correspondant.

11. Procédé selon la revendication 10, dans lequel l'accès au registre correspondant comprend le verrouillage (260) des données d'écriture dans le registre correspondant.

12. Procédé selon l'une quelconque des revendications 9 à 11, comprenant en outre la remontée des données de lecture dans le pipeline de modules du module suivant à un module précédent.

13. Circuit de traitement (5) comprenant :
une pluralité de modules (20A à 20E), comprenant chacun un ou plusieurs registres (24) ;
un bus de registre interne (30) comportant deux segments (32) ou plus configurés pour relier la pluralité de modules en série afin de constituer un pipeline de modules et configuré pour faire passer une demande de registre comprenant une demande de lecture comprenant une adresse de registre cible à travers les modules reliés en série ;
un décodeur (23) pour chaque module, ledit décodeur étant configuré pour effectuer :
- la comparaison de l'adresse de registre cible à une plage d'adresses de registre pour le module correspondant ;
- si l'adresse de registre cible se trouve dans la plage d'adresses de registre du module correspondant, l'accès à un registre correspondant dans le module et la lecture des données à partir du registre correspondant pour délivrer des données de lecture du registre correspondant au module précédent sur la première interface ; et
- si l'adresse de registre cible est à l'extérieur de la plage d'adresses de registre du module correspondant et s'il y a un module suivant, le passage de la demande de registre au module suivant.

14. Circuit de traitement selon la revendication 13, dans lequel la demande de registre comprend une demande d'écriture et comprend des données d'écriture et dans lequel les décodeurs sont configurés pour faire descendre les données d'écriture du module correspondant dans le pipeline de modules jusqu'à ce que les données d'écriture atteignent le module contenant le registre correspondant, et facultativement
dans lequel les décodeurs sont configurés pour verrouiller les données d'écriture dans le registre correspondant.

15. Circuit de traitement selon la revendication 13, dans lequel le décodeur est en outre configuré pour faire remonter les données de lecture dans le pipeline de modules du module suivant à un module précédent.
